# EUROPEAN PATENT APPLICATION

(11) **EP 4 664 374 A1**
(43) Date of publication of application: **17.12.2025**
(21) Application number: 24181401.1
(22) Date of filing: 11.06.2024
(51) Int. Cl.: G06Q 20/06, G06Q 20/36, G06Q 20/38

(54) **SECURE PAYMENT TRANSACTION DEVICE**

(71) Applicant: Giesecke+Devrient advance52 GmbH, 81677 München (DE)
(72) Inventor: Hupel, Lars, 81677 München (DE)
(74) Representative: Giesecke+Devrient IP

(57) **Abstract**

The present invention relates to a secure payment transaction device (1), comprising:
- one or more monetary value tokens (21) of a monetary value token system (70);
- a monetary value token management unit (11) adapted to directly exchange monetary value tokens in transactions (107) of the monetary value token system (70);
- an updating unit (25) for updating data of the secure payment transaction device (1). An online authentication information (23,33,43) of an online digital money system (80) can be added to the secure payment transaction device (1) via the updating unit (25) thereby enabling use of the secure payment transaction device (1) in the online digital money system (80).

## Description

The invention relates to a secure payment transaction device including a monetary value token of a monetary value token system, to an online digital money system and to a system including the device and/or the online digital money system.

In the field of digital money systems, including digital currency systems, account-based systems and token-based systems form well known different approaches.

Many of the recent account-based systems use blockchains, wherein ownership of the digital money is transferred within the blockchain, e.g. by changing the assignment from one account to another account.

In token-based digital money systems typically a monetary value token is transferred between secure transaction units. For example EP 3 671 514 B1, WO 2020/212331 A1, WO 2021/170646 A1, WO 2023/011758 A1 and WO 2023/011761 A1 disclose different aspects of such systems.

Secure payment transaction devices, particularly smart cards or security tokens, are known to be helpful in a digital money system. They may for example securely store and exchange the monetary value tokens of a user. Although secure payment transaction devices are typically issued to the user and used as issued, besides performing transactions it may further be possible to remotely update data and/or functions of the secure payment transaction device.

According to an object of the invention a secure payment transaction device shall be provided which improves security, preferably at the same time improving performance and/or flexibility, particularly in an online scenario.

The above-identified objectives are solved with the features of the independent claims. Further advantageous embodiments are described in the dependent claims.

According to an aspect of the present invention, there is provided a secure payment transaction device, comprising:
- one or more monetary value tokens of a monetary value token system;
- a monetary value token management unit adapted to directly exchange monetary value tokens in transactions of the monetary value token system;
- an updating unit for updating data of the secure payment transaction device.

In the present solution an online authentication information of an online digital money system can be added to the secure payment transaction device via the updating unit thereby enabling use of the secure payment transaction device in the online digital money system.

The secure payment transaction device of the monetary value token system thus can be added to the (at least one) online digital money system. The secure payment transaction device of the monetary value token system is reused for authentication in the online digital money system. Due to the reuse, particularly the security of an online digital money system not providing such a system-dedicated secure hardware device may be improved. Further due to the reuse, the security (and/or a security certification) of the secure payment transaction device in this approach remains unaffected, since only data are added.

Preferably two or more online authentication information of respective two or more centrally managed digital money stores (e.g. wallets or accounts) can be added to the secure payment transaction device via the updating unit. The two or more centrally managed digital money stores may be digital money stores, such as wallets or accounts, of the online digital money system and/or digital money stores of different online digital money systems.

Accordingly, the secure payment transaction device of the monetary value token system may become a system part of the digital money system for one (preferably two) or more centrally managed digital money stores and/or may become a system part of one (preferably two) or more digital money systems.

The online digital money store is typically managed on a server of the online digital money system (centrally managed) and typically is a centrally managed wallet (or hosted wallet) or a centrally managed account. An online digital money store may be adapted to exchange digital money online and could also be referred to as an online digital money payment unit.

In preferred embodiments the online authentication information comprises an online authentication certificate. The online authentication certificate may be a certificate (of the digital money system) for an (public) authentication key of the secure payment transaction device in the monetary value token system and/or for an authentication identifier of the secure payment transaction device in the monetary value token system. Typically, a token system certificate (of the monetary value token system) may already - exist in the secure payment transaction device for the authentication key and/or the authentication identifier.

The online authentication information may (alternatively or additionally) comprise one or more single-use online transaction authentication values. Single-use online transaction authentication values are well-known in the field of credit card schemes, but may be used in online digital money systems. A single-use online transaction authentication value can be used in an online transaction for authenticating the transaction. However, it can be used only once/in a single transaction.

An addition of the online authentication certificate and/or the single-use online transaction authentication value(s) allows to add the secure payment transaction device to the online digital money system without the need to register the secure payment transaction device (as an authentication means) in the online digital money system.

In variants the online authentication information comprises an online authentication identifier and/or an online authentication credential. The authentication credential preferably comprising or consisting of: an authentication certificate, an authentication key and/or one or more single -use online transaction authentication values.

As already indicated above, the secure payment transaction device and/or the online authentication information may be registered in the online digital money system, particularly for an online digital money store of the online digital money system. Preferably the secure payment transaction device is registered as a secondary online authentication means in addition to a primary online authentication means. The security and/or the resilience of the online digital money system thus will be improved. In particular, for a given transaction the online digital money system (e.g. the transaction terminal or a digital money server) may now select an online authentication means from the primary online authentication means and one or more secondary online authentication means.

Further to the online authentication information it may be added to the secure payment device via the updating unit: a system identifier, identifying the online digital money system; an online identifier, identifying a centrally managed digital money store/ payment unit, such as an account or wallet, in the online digital money system; and/or an authentication public key of the online digital money system.

The secure payment transaction device is a system part of the monetary value token system. It has been issued to a user as a device of the monetary value token system. Subsequently, i.e. post-issuance, the authentication information can be added/the secure payment transaction becomes a system part of the online digital money system. The updating unit preferably is a post-issuance updating unit and/or a remote updating unit. Since the updating unit is adapted for adding data only (no function/code is added), it could be referred to as a data updating unit. For the sake of clarity it is noted that an addition of functions (or code) is presently neither required nor part of the solution. In particular, adding such functions or even a complete online digital money application may affect the security of the secure payment transaction device or at least an existing security certification of the secure payment transaction device. An online digital money system function, such as a dedicated cryptographic function of the online digital money system, may optionally exist in the secure payment transaction device. Preferably however, the secure payment transaction device does not comprise a dedicated online digital money system function. The secure payment transaction device may comprise standard functions, e.g. a standard cryptographic algorithm, a general authentication command, a general read command etc., which can be reused in the online digital money system.

In preferred embodiments the secure payment transaction device comprises a dedicated data storage area, preferably within the monetary value token unit or a dedicated online authentication information area, for adding the online authentication information. Accordingly, the data storage area would not have to be created by the updating unit.

Furthermore, the secure payment transaction device the secure payment transaction device may comprise a secure processing unit, a local interface unit, and/or a data storage unit. The local interface unit is preferably adapted to temporarily establish (only) local communication with a terminal (device), e.g. of the monetary value token system (and/or the online digital money system(s)). The local interface unit may be contact-based, like USB or ISO 7816, or contactless, like RFID, NFC or Bluetooth (Low Energy). The secure payment transaction device preferably is an independent hardware device (or portable hardware device), such as a smart card, RFID token or USB token. The secure payment transaction device does not include a remote communication unit and/or does require a local terminal for remote communication/online transactions.

The monetary value tokens of the monetary value token system may be exchanged in (offline) transactions of the monetary value token system not requiring network access, e.g. access to the internet or a mobile communication network. Monetary value tokens of the monetary value token system may also be exchanged between system units, such as secure payment transaction device and/or hosted payment transaction units, via a network/in online transactions and/or in offline transactions (not requiring/using the network). In certain embodiments the monetary value token system only supports offline transactions and thus could be referred to as an offline system. In the online digital money system digital money may be transferred between system parts/units of the online digital money system in online transactions (requiring/using network access). An online digital money system may optionally be linked to a system supporting offline transactions for the digital money or its offline correspondent.

It is particularly advantageous that the secure payment transaction device is added to the online digital money system(s)/becomes a part of the online digital money system(s). The secure payment transaction device is issued for the monetary value token system and thus initially cannot be used in the online digital money system(s). It can be used in the online digital money system(s) only after addition of the online authentication information and/or registration as a secondary authentication means in the online digital money system(s).

An added online authentication information in the secure payment transaction device may form an indicator that the secure payment transaction device of the monetary value token system is a part of the online digital money system for a local terminal of the online digital money system or a system server of the online digital money system. The local terminal (or the system server) may be adapted to reuse the secure payment transaction device for an authentication in an online transaction of the online digital money system.

The secure payment transaction device (after the addition of the authentication information) is used for authentication in the online digital money system, particularly for authentication towards an online digital money system server, for authentication towards a transaction partner of a transaction in the online digital money system and/or for authentication of a transaction in the online digital money system. The online digital money system typically comprises digital money stores/ digital money payment entities, e.g. wallets or accounts.

According to an aspect of the present invention, there is provided an online digital money system server, comprising:
- multiple digital money stores/digital money payment entities, such as wallets or accounts, managed on the online digital money system server for different users;
- for at least one digital money store of the digital money stores: a registration of a primary authentication means associated with the digital money store.

In the present solution a secure payment transaction device of a monetary value token system, the secure payment transaction device storing monetary value tokens exchangeable in payment transactions of the monetary value token system, may be registered as an alternative, secondary authentication means associated with the digital money store.

The secure payment transaction device and / or the online digital money system server may be adapted as indicated above. By subsequently adding an additional authentication means, the server is improved, wherein existing resources (the secure payment transaction device) are reused.

Preferably, the registration of the secure payment transaction device comprises one or more of: a device identifier of the secure payment transaction device, an authentication public key of the secure payment transaction device, a system identifier of the monetary value token system and/or an online certificate for the secure payment transaction device.

The online digital money system or the monetary value token system may comprise a remote update control server for adding the registration of the secure payment transaction device and optionally for adding online authentication information of the online digital money system to the secure payment transaction device. remote update control server may generate or provide the online authentication information. It preferably stores a private key for generating the online authentication certificate and/or a secret key for generating the online authentication information (derived key or derived single -use online transaction authentication values) or pre-generated single -use online transaction authentication values. The remote update control server preferably is a remote file update control server. The remote update control server may be adapted to control that the online authentication information in the secure payment transaction device and the registration in the digital money system are consistent.

According to a further aspect of the present invention a general (or overall) system, is provided. The general (or overall) system may comprise: at least one, preferably multiple, secure payment transaction device(s) as described above, at least one, preferably tow or more, online digital money system server, preferably as indicated above, and a monetary value token register of the monetary value token system. The general system optionally further comprises a remote update control server, primary authentication means and/or terminal devices.

In preferred variants
two or more online authentication information of respective two or more online digital money stores (of optionally different digital money systems) can be added to the secure payment transaction device; and/or
two or more secure payment transaction devices can be added as secondary online authentication means in addition to a primary online authentication means in the online digital money system.

In the following, the invention or further embodiments and advantages of the invention are explained in more detail based on drawings, wherein the drawings describe only some of the possible embodiments of the invention. At least elements drawn with dashed lines are considered as optional elements.

The drawings are not to be regarded as true to scale, and individual elements of the drawings may be shown in exaggeratedly large or exaggeratedly simplified form.
Fig. 1 shows a monetary value token system and an online digital money system;
Fig. 2 shows first variants for enabling a secure transaction device of a monetary value token system for an online digital money system;
Fig. 3 shows second variants for enabling a secure transaction device of a monetary value token system for an online digital money system; and
Fig. 4 shows third variants for enabling a secure transaction device of a monetary value token system for an online digital money system.

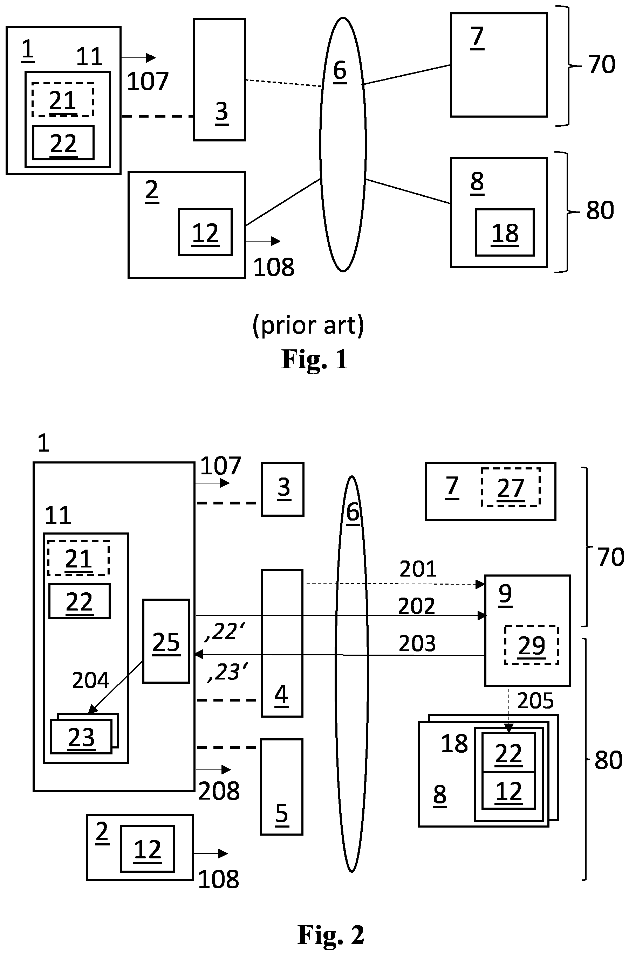

Fig. 1 illustrates two different payment transaction systems: a monetary value token system 70 and an online digital money system 80.

The monetary value token system 70 comprises multiple secure transaction devices 1, token transaction terminals 3 and a token register 7. The secure transaction devices 1 store monetary value tokens 21 and exchange monetary value tokens 21 in monetary value token transactions 107. A token management unit 11 of the secure transaction device 1 includes the monetary value tokens 21 and a public authentication key 22 of the secure transaction device in the monetary value token system 70. The secure transaction devices 1 is temporarily connectable to the token transaction terminal 3, via a local interface of the secure transaction device 1. The secure transaction devices 1 do not include a remote interface for the network 6, which may be the internet or a mobile communication network, such as 4G, 5G or similar.

The online digital money system 80 comprises multiple online transaction units 2 adapted to perform online digital money transactions 108 and at least one online digital money server 8. Centrally managed digital money stores 18 will be centrally managed on the online digital money server 8. Typically, the online transaction units 2 comprise an online authentication key. For a centrally managed digital money store 18 an authentication means , in Fig. 1 the online transaction unit 2, will be registered.

As usual in the figures, optional elements are in most cases indicated by dashed lines, for example elements 27, 29,201 and 205 in Fig. 2. The network connections with network 6 shown in Fig. 1 are omitted in the other figures. Only the temporary connections with terminals 3-5 are illustrated.

Fig. 2 illustrates a monetary value token system 70 and an online digital money system 80. For the sake of brevity information provided with respect to a previous figure will not be repeated here and in the following figures. The token register 7 of the token transaction system 70 may be a token reference register including a token references 27 for valid tokens 21 of the token transaction system 70. Different variants of this approach and other token registers are known and described in more detail for example in EP 3 671 514 B1, WO 2020/212331 A1, WO 2021/170646 A1, WO 2023/011758 A1 or WO 2023/011761 A1.

A secure payment transaction device 1 stores one or more monetary value tokens 21 of the monetary value token system 70. The monetary value token management unit is adapted to directly exchange monetary value tokens 21 in token transactions 107 of the monetary value token system 70. The secure payment transaction device 1 further comprises a data updating unit 25 for updating data of the secure payment transaction device 1. A token system certificate exists for the public authentication key 22 of the secure payment transaction device 1. The secure payment transaction device 1 also stores the private authentication key of the key pair formed by the private and the public authentication key. The certified public authentication key 22 and the secret authentication key are used in token transactions 107, typically for authenticating the secure payment transaction device 1.

The secure payment transaction device 1 initially is not a sub-part of the online digital money system 80. For an online digital money store 18 in an online digital money server 8 the online transaction unit 2 is registered as an authentication means. For example, the public key 12 of the online transaction unit 2 (or its transaction unit identifier) may be registered in the online digital money server 8. Accordingly, online transaction unit 2 may be used in an online digital money transaction 108.

An online authentication information 23 of the online digital money system 80 can be added to the secure payment transaction device 1 via the updating unit 25, thereby enabling use of the secure payment transaction device 1 in the online digital money system 80. In the example shown in Fig. 2 the online authentication information 23 is a certificate of the online digital money system 80 for the public authentication key 22. The authentication information 23 is preferably updated (in an existing data field dedicated for receiving authentication information) in the data storage area of the token management unit 11. The authentication information 23 is provided and/or generated by online enabler/data update control server 9.

An enablement process 201-205 adds the secure payment transaction device 1 of the monetary value token system 70 to the online digital money system 80. A device enablement request 201 may optionally be received from a terminal to which the secure payment transaction device 1 is temporarily connected, such as update terminal 4 in Fig. 2 or digital money terminal 5. The data update control server 9 receives 202 the public authentication key 22 of the secure payment transaction device 1. It generates a certificate for the received public authentication key 22. For example, authentication key manager 29 may create the certificate (by signing the public key), preferably after successful authentication of the secure payment transaction device 1 using public authentication key 22. The certificate is sent 203 to and stored 204 in the secure payment transaction device 1 as the authentication information 23. In optional step 205 the public key 22 of the secure payment transaction device 1 is registered for digital money store 18 in the online digital money server 8. The secure payment transaction device 1 is in particular registered as a secondary authentication means in addition to primary authentication means (the online transaction unit 2) for digital money store 18. The secure payment transaction device 1 now - after the enablement process 201-205 - can also be used in an online digital money transaction 208 of the digital money system 80. The secure payment transaction device 1 may for example temporarily be connected to digital money terminal 5. The authentication key pair of the secure payment transaction device 1 in the token transaction system 70 is reused in the digital money system 80.

As further indicated in Fig. 2 the secure payment transaction device 1 may comprise more than one authentication information 23. Hence, the secure payment transaction device 1 may be added to more than one digital money store 18 of the same and/or different digital money systems 80.

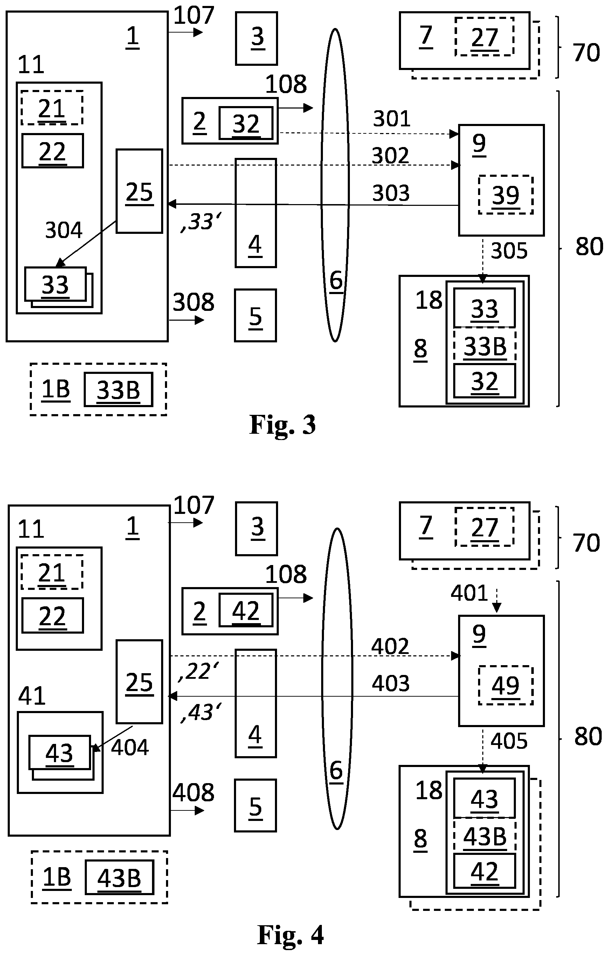

Fig. 3 also illustrates a secure payment transaction device 1 being added (post issuance) to the digital money system 80. The secure payment transaction device 1 is updated 303, 304 via updating unit 25 with authentication information 33 in the form of one or more single use authentication values.

Single use authentication values are as such well-known in the art. A single use authentication value can be added to a transaction in order to authenticate the transaction. The system checks if the single use authentication value is valid (e.g. was pre-generated in the system) and then performs the transactions. In contrast to authentication data generated in the transaction, which thus may be transaction dependent, single use authentication values are static/transaction independent (since they are pre-generated). Single use transaction authentication values e.g. avoid the local storage of authentication data generating secrets.

In Fig. 3 the single use authentication values 33 are preferably generated (or provided) by authentication value manager 39 of update control server 9. Online transaction unit 2 may also comprise and use single use online authentication values 32,alternatively however an authentication key may as well be used. Consequently, the different authentication means registered for a digital money store 18 may use the same type or different types of authentication information.

In process 301-305 of Fig. 3, steps 301, 302 and 305 are optional. A step of device enablement requesting 301 for the digital money store 18 may be performed by online transaction unit 2 of the digital money store 18. The request thus may be authorized by the primary authentication means. Update control server 9 does not need to receive the public key 22 in step 302 for generating corresponding authentication information, may however still use the public key 22 for authentication of the secure payment transaction device 1 and/or as a seed for generating the single use authentication value 33 in authentication value manager 39 (e.g. derivation key + seed + random => derived single use authentication value). Typically, in step 305 the single use authentication value 33 updated to the secure payment transaction device 1 will also be sent to the online digital money server 8 and stored for the digital money store 18. Alternatively however, the online digital money server 8 may use external means, e.g. value manager 49, to check the single use authentication value or may be able to check internally, e.g. if holding a corresponding derivation key.

As further illustrated in Fig. 3 one or more additional secure payment transaction device 1B may as well be added as secondary authentication means for the same digital money store 18. Hence, secure payment transaction devices 1 and/or 1B may be used in online digital money transactions 308 after being added to the digital money system. The secure payment transaction devices 1, may be from the same different monetary token system 70 or from different monetary token systems 70. Secure payment transaction device 1B has been updated with authentication information 33B, preferably also in the form of single use authentication value(s). In addition secure payment transaction device 1B is registered with the authentication information 33B in the digital money store 18.

Finally, Fig. 4 also shows another variant of the present approach. The illustrated options of multiple monetary token systems 70, multiple secure payment transaction device 1, 1B, multiple digital money stores for which authentication information 43 may be added in the secure payment transaction device 1 and multiple digital money systems 80 or digital money servers 8 basically already has been discussed above. The analog process steps 401-405, online digital money transaction 408 and options for the authentication information 42,43, 43B also have been described sufficiently already.

The secure payment transaction device 1 of the monetary token system 70 may comprise a dedicated data storage area 41 for adding authentication information 43 of online digital money stores 18, servers 8 and/or systems 80. Hence, in this example, the authentication information 43 is not stored in the token management unit 11.

### REFERENCE SIGNS

- 1: secure transaction device
- 11: token management unit
- 21: monetary value token
- 22: public authentication key
- 2: online transaction unit
- 12: online authentication key
- 3: token transaction terminal
- 6: data network
- 7: token register
- 8: online digital money server
- 18: centrally managed digital money store
- 70: token transaction system
- 80: online digital money system
- 107: monetary value token transaction
- 108: online digital money transaction

- 4: update terminal
- 5: online transaction terminal
- 9: online enabler
- 18: centrally managed digital money store
- 23: online authentication certificate
- 25: updating unit
- 27: monetary value token reference
- 29: authentication key manager
- 201: device enablement requesting
- 202: public key transmission
- 203: authentication information transmission
- 204: authentication information addition
- 205: device registration
- 208: online digital money transaction

- 1B: further secure transaction device
- 32, 33, 33B: single-use authentication value
- 39: authentication value manager
- 301: device enablement requesting
- 302: device identifier transmission
- 303: authentication information transmission
- 304: authentication information addition
- 305: authentication value addition
- 308: online digital money transaction

- 41: online authentication data area
- 42, 43, 43B: online authentication information
- 49: authentication information manager
- 401: device enablement requesting
- 402: public key transmission
- 403: authentication information transmission
- 404: authentication information addition
- 405: device registration
- 408: online digital money transaction

## Claims

1. A secure payment transaction device (1), comprising:
- one or more monetary value tokens (21) of a monetary value token system (70);
- a monetary value token management unit (11) adapted to directly exchange monetary value tokens in transactions (107) of the monetary value token system (70);
- an updating unit (25) for updating data of the secure payment transaction device (1); **characterized in that**
an online authentication information (23,33,43) of an online digital money system (80) can be added to the secure payment transaction device (1) via the updating unit (25) thereby enabling use of the secure payment transaction device (1) in the online digital money system (80).

2. The secure payment transaction device (1) of claim 1, **characterized in that** two or more online authentication information (23,33,43) of respective two or more centrally managed digital money stores (18) can be added to the secure payment transaction device (1) via the updating unit (25), the two or more centrally managed digital money stores (18) comprise digital money stores of the online digital money system (80) and/or digital money stores of different online digital money systems (80).

3. The secure payment transaction device (1) of one of the preceding claims, the online authentication information (23,33,43) comprises an online authentication certificate (23), preferably for an authentication key (22) and/or authentication identifier of the secure payment transaction device (1) in the monetary value token system (7).

4. The secure payment transaction device (1) of one of the preceding claims, **characterized in that** the online authentication information (23,33,43) comprises one or more single-use online transaction authentication values (33).

5. The secure payment transaction device (1) of one of the preceding claims, **characterized in that** the online authentication information (23,33,43) comprises an online authentication identifier and/or an online authentication credential (23,33,43), preferably comprising an authentication certificate (23), an authentication key (43) and/or one or more single -use online transaction authentication values (33).

6. The secure payment transaction device (1) of one of the preceding claims, **characterized in that** the secure payment transaction device (1) and/or the online authentication information (23,33,43) is registered in the online digital money system (80), preferably registered as a secondary online authentication means in addition to a primary online authentication means (2).

7. The secure payment transaction device (1) of one of the preceding claims, **characterized in that** further to the online authentication information (23, 33, 43) it is added via the updating unit (25):
- a system identifier, identifying the online digital money system (80); and/or
- an online identifier, identifying a centrally managed digital money unit, such as an account or wallet, in the online digital money system (80), and/or
- an authentication public key of the online digital money system (80).

8. The secure payment transaction device (1) of one of the preceding claims, **characterized in that**
the updating unit (25) being a remote updating unit and/or a post-issuance updating unit; and/or
the secure payment transaction device (1) comprises a dedicated data storage area, preferably within the monetary value token unit (11) or a dedicated online authentication information area (41), for adding the online authentication information (23,33,43) .

9. The secure payment transaction device (1) of one of the preceding claims, **characterized in that**
the secure payment transaction device (1) comprises one or more of a secure processing unit, a local interface unit, and/or a data storage unit; and/or
the monetary value token system (7) being an offline system.

10. The secure payment transaction device (1) of one of the preceding claims, **characterized in that**
the secure payment transaction device (1) is added to the online digital money system (80) and preferably can be used in the online digital money system (80) only after addition of the online authentication information (23,33,43); and/or
an added online authentication information (23,33,43) in the secure payment transaction device (1) for a local terminal (3,4,5) forms an indicator that the secure payment transaction device (1) of the monetary value token system (70) is a part of the online digital money system (80); and/or
the secure payment transaction device (1) is used for authentication in the online digital money system (80), particularly for authentication towards an online digital money system server (8), for authentication towards a transaction partner of a transaction in the online digital money system (80) and/or for authentication of a transaction in the online digital money system (80).

11. Online digital money system server (8) comprising:
- multiple digital money stores (18), such as wallet or account, managed on the online digital money system server (8) for different users;
- for a digital money store (18): a registration of a primary authentication means (2) associated with the digital money store;
**characterized in that**
- a secure payment transaction device (1) of a monetary value token system (7), the secure payment transaction device (1) storing monetary value tokens (21), may be registered as an alternative, secondary authentication means associated with the digital money store (18).

12. The online digital money system server (8) of claim 11 **characterized in that** the secure payment transaction device (1) being adapted in accordance to one of claims 1 to 10; and/or
the registration of the secure payment transaction device (1) comprises one or more of:
a device identifier of the secure payment transaction device (1), an authentication public key of the secure payment transaction device (1), a system identifier of the monetary value token system (7) and/or an online certificate for the secure payment transaction device (1).

13. The online digital money system server (8) of claim 11 or 12 **characterized in that**
the online digital money system (8) or the monetary value token system (7) comprise a remote update control server (9) for adding the registration of the secure payment transaction device (1) and optionally for adding online authentication information (23,33,43) of the online digital money system (80) to the secure payment transaction device (1).

14. A system comprising:
- at least one secure payment transaction device (1) according to one of claims 1 to 10; and
- at least one online digital money system server (8), preferably in accordance with one of claims 11 to 13, and
- a monetary value token register (7) of the monetary value token system(70), optionally further comprising a remote update control server (9), primary authentication means (2) and/or terminal devices (3,4,5).

15. The system of claim 14 **characterized in that**
two or more online authentication information (23,33,43) of respective two or more online digital money stores (18) of optionally different digital money systems (80) can be added to the secure payment transaction device (1); and/or
two or more secure payment transaction devices (1) can be added as secondary online authentication means in addition to a primary online authentication means in the online digital money system (80).
